# EUROPEAN PATENT APPLICATION

(11) **EP 2 770 692 A1**
(43) Date of publication of application: **27.08.2014**
(21) Application number: 14156474.0
(22) Date of filing: 25.02.2014
(51) Int. Cl.: H04L 29/06, H04W 12/02, H04W 4/02, H04W 4/04

(54) **Method of linking a specific wireless device to the identity and/or identification measure of the bearer**

(30) Priority: 26.02.2013 US 201313776782
(71) Applicant: U-TX Ltd., 3036 Limassol (CY)
(72) Inventor: Glasberg, Roy, 1065 Nicosia (CY); Barlev, Ishay, 4645 Limassol (CY)
(74) Representative: Fresh IP

(57) **Abstract**

A method for targeting a wireless device in the vicinity of a checkpoint, the checkpoint including at least one optionally automated operator station, wherein the targeted device is to be correlated with the identity of the targeted bearer of the device. Each station has at least a wireless device identity sensor and the vicinity of each station is defined as a bubble having a specified radius. The wireless device is part of an authorized wireless device network. The method includes installing an International Mobile Subscriber Identity (IMSI) catcher as a surreptitious mobile tower in the midst of the authorized official network, and registering with the network. The registration supports all the present operators in the terminal. The method also includes moving the wireless device to one of the bubbles prior to the bearer leaving the counter and correlating the wireless device ID with the bearer ID.

## Description

### FIELD OF THE INVENTION

The present invention generally relates to wireless devices, and more particularly to linking a wireless device to the bearer of the wireless device, and to extending the scope of the link between the bearer and identifying characteristics of the wireless device.

### BACKGROUND OF THE INVENTION

According to Wikipedia, an International Mobile Subscriber Identity (IMSI) catcher is essentially surreptitious mobile tower acting between the target mobile phone(s) and the service provider's authorized towers. As such it is considered a Man In the Middle (MITM) attack. It is used as an eavesdropping device for interception and tracking of cellular phones, and usually is undetectable for the users of mobile phones. Such a virtual base transceiver station (BTS) is a device for identifying a targeted subscriber of a nearby Global System for Mobile Communications (GSM) mobile phone network and intercepting his calls.

The GSM specification requires the handset to authenticate to the network, but does *not* require the network to authenticate to the handset. This well-known security hole can be exploited by an IMSI catcher.

The IMSI catcher pretends to be a base station of the network, and logs the IMSI numbers of all the mobile stations in the area, as they attempt to attach to the IMSI-catcher. It forces a mobile phone connected to it to use no call encryption, making the call data easy to intercept and convert to audio. IMSI catchers are used in some countries by law enforcement and intelligence agencies.

Every mobile phone has the requirement to optimize the reception. If there is more than one base station of the subscribed network operator accessible, it will always choose the one with the strongest signal. An IMSI-catcher causes every mobile phone of the simulated network operator within a defined radius to log in. With the help of a special identity request, it is able to force the transmission of the targeted IMSI.

The assignment of an IMSI catcher has a number of difficulties:
1. It must be ensured that the mobile phone of the observed person is in standby mode and the correct network operator is found out. Otherwise, for the mobile station, there is no need to log into the simulated base station.
2. Depending on the signal strength of the IMSI-catcher, numerous IMSI's can be located. The problem is to find the right one.
3. All mobile phones in the catchment area have no access to the network. Incoming and outgoing calls cannot be patched through for these subscribers. Only the observed person has an indirect connection.

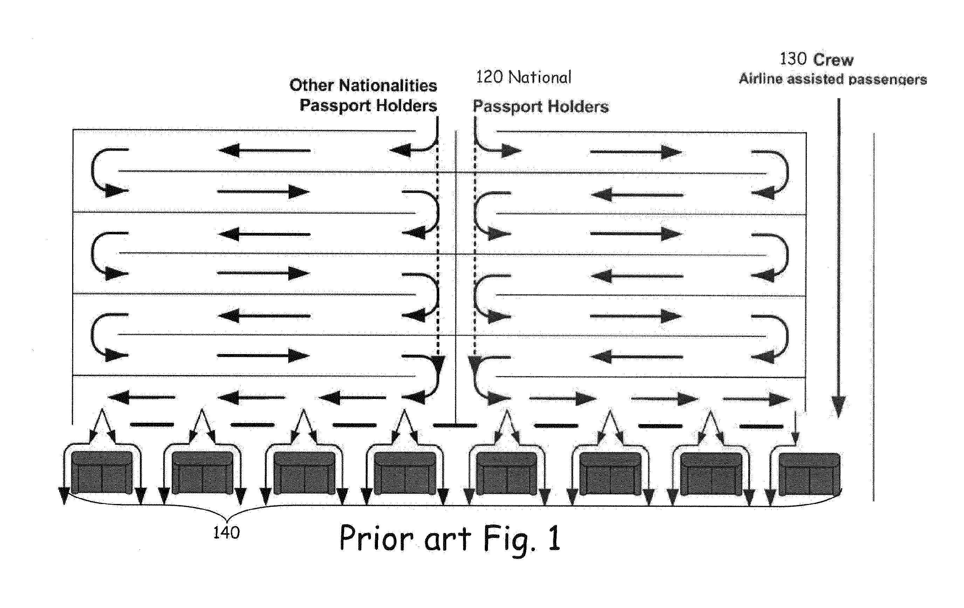

Fig. 1 is a prior art schematic illustration of an airport passport checkpoint queue. Foreign nationals 110, nationals 120 and crew and assisted passengers 130 are given respective queuing areas leading to the operator terminals 140.

Existing forms of ID's present numerous challenges: ease and speed of identification, bearer involvement in the process, counterfeit ID's. Also, existing solutions have difficulty tracking and/or monitoring bearers over time and across multiple geographic locations. Today's solutions also depend on external information sources.

Wireless devices, including cell phones, as well as radio frequency identification (RFID), Wireless Local Area Network (WLAN), Bluetooth, etc., are omnipresent worldwide and are a major source of information. Additional non-limiting examples of wireless devices include wireless tracker tags, and handheld location systems such as Global Positioning System (GPS) receivers. Wireless devices are important not just because they are widely available, but because they can be interacted with covertly. Wireless device monitoring systems are hard-pressed to be effective and cost-effective. For example, the cellular phone ID of a bearer may be unknown or the number submitted by a bearer may be fake, stolen or part of an untraceable pre-paid system.

Thus, it would be advantageous to provide a system and a method that overcomes the disadvantages of the prior art.

### SUMMARY OF THE INVENTION

Accordingly, it is a principal object of the present invention to attain a high correlation of the wireless device ID to the bearer ID and/or to be able to recognize and/or identify a person and/or equipment in many scenarios, for example as the bearer of a device and/or the device itself. The need exists in different contexts such as commercial, governmental, security, safety and others. Once identity has been established to some degree of certainty, appropriate action can follow. The practice of using a link between a bearer and an identifying characteristic, such as ID card, picture, fingerprint, voiceprint, etc, is used in many ways.

A method is disclosed for targeting a wireless device in the vicinity of a checkpoint, the checkpoint including at least one optionally automated operator station, wherein the targeted device is to be correlated with the identity of the targeted bearer of the device. Each station comprises at least a wireless device identity sensor and the vicinity of each station is defined as a "bubble" having specified dimensions in which high correlation of the wireless device ID to the bearer ID is achieved. The wireless device is part of the authorized wireless device network or an ad-hoc network. The method includes installing a wireless device ID identifier such as an International Mobile Subscriber Identity (IMSI) catcher as a surreptitious mobile tower in the midst of the real network and registering with the real network. For example, the registration supports all the present operators in the terminal or an as needed subset in the vicinity of the checkpoint. The method also includes correlating the wireless device ID with the bearer ID prior to the bearer leaving the counter or thereafter.

The operation can be applied to any situation where someone enters a specific area and his/her identity is being checked, e.g. an airport or secured facility's entrance, prison, SCIF, train or metro station. The system has the capability to match the wireless device ID of the traveler. As an example, let's consider that a traveler with a particular passport ID is entering the country. The system matches the event of ID registration with the traveler's mobile phone (which is a wireless device) and subsequently whenever the traveler uses his mobile phone it can be monitored. In different applications, voiceprints, fingerprints, social security numbers can be used. Even if the suspect changes his passport, this event can lead to intervention. As long as the phones in the area are acquired by the system, the phone bearers are unable to make phone calls. It is possible to connect the phones to the real network by using the man in the middle technology (MITM). It allows all these people to use their phones normally.

The process of creating the link involves correlation of data from two or more sources relating to a given location area and time. Where each source provides a parameter of wireless device identification, such as IMSI, International Mobile Equipment Identity (IMEI), MAC address, etc, and/or identifying characteristics of the bearer, such as ID card number, picture, fingerprint, voiceprint, etc.

The logical link, once established can be used to identify the bearer based on identification of the linked wireless device in a location. Alternatively, given a bearer identity in a specific location, the linked wireless device identity can be deduced and/or verified if needed.

There has thus been outlined, rather broadly, the more important features of the invention in order that the detailed description thereof that follows hereinafter may be better understood. Additional details and advantages of the invention will be set forth in the detailed description, and in part will be appreciated from the description, or may be learned by practice of the invention.

### BRIEF DESCRIPTION OF THE DRAWINGS

In order to understand the invention and to see how it may be carried out in practice, a preferred embodiment will now be described, by way of a non-limiting example only, with reference to the accompanying drawings, in the drawings:
Fig. 1 is a prior art schematic illustration of airline passport checkpoint queues;
Fig. 2 is a schematic illustration of a possible deployment where there is interaction with a bearer who may be carrying a wireless device, constructed according to an exemplary embodiment of the present invention; and
Fig. 3 depicts three counters referenced as A, B and Z and a server, constructed according to an exemplary embodiment of the present invention.

All the above and other characteristics and advantages of the invention will be further understood through the following illustrative and non-limitative description of preferred embodiments thereof.

### DETAILED DESCRIPTION OF PREFERRED EMBODIMENTS

The principles and operation of a method and an apparatus according to the present invention may be better understood with reference to the drawings and the accompanying description, in which like numerals designate corresponding elements throughout, it being understood that these drawings are given for illustrative purposes only and are not meant to be limiting.

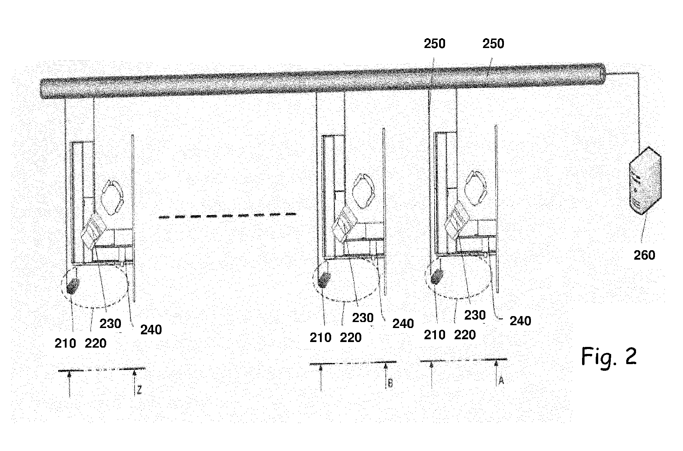

Fig. 2 is a schematic illustration of exemplary deployment where there is interaction with a suspect bearer and the wireless device in this example is of the type of a cellular phone, who may be carrying a wireless device, constructed according to an exemplary embodiment of the present invention. Such locations are common in everyday life, such as a store checkout counter, airport passport control configuration, etc. In such a location there may be one or more counters. The functionality may be packaged in several ways and may be integrated as needed in a particular deployment.

### Base Transceiver Station (BTS):

The operator terminal at the BTS includes means to record ID parameters of the bearer--for example, passport details, picture, credit card and/or fingerprint. There is provided an acquisition unit (server) and a border control unit. At this point there may be 100 mobile phones in the queue and it is known that one of them is the one under suspicion, but it is not know which one it is. The purpose of the acquisition is to take a "snapshot" identifying all the phones in the queue and all the cell phones are in that snapshot. Each registration of a passport is called an "event."

The antenna 210 for each one of these BTS's is kept in a small transition area called a "bubble" 220. The BTS itself may typically be at another location, communicating with antenna 210 by wired means or wirelessly. The strength of the signal falls off sharply from the center of bubble 220. Each one of these mobile phones is providing the system with measurements of the signal. Another event that can be recorded is that a suspicious mobile phone has entered the area. Each phone, for example, shows a bar on its screen, typically in the upper right hand corner, indicating the signal power.

So the operator tells the mobile phone of the bearer to monitor the towers in its area and the strength of the signal from each tower is an indication of its distance from the tower and the algorithm matches the pattern of each cell phone and is able to determine which cell phone matches the passport. That is, each phone has its own unique "footprint" of its signal pattern with the towers.

In other words, the system is able to determine with a high degree of accuracy that the person holding a particular ID has a particular cell phone. For example the strength of the signal to each tower indicates the distance from that tower. Also the angle of the vector to each phone adds to the ability to pinpoint the exact position of the suspect phone.

Even if one doesn't have the suspect phone in first place out of 100 phones, it will most likely be in second or third place. The accuracy is increased enormously if a second detail, such as angular information, is correlated. The operation does not depend upon the particular antenna 210. Any phone using GSM or Universal Mobile Telecommunications System (UMTS) technology will work. Fig. 2 depicts three counters referenced as A, B and Z and a server 260.

This deployment may be co-located at one site or represent multi-site deployment.

Each BTS antenna 210 acts as a wireless device identity sensor capable of identifying one or more device types, including mobile phone, iPhone, tablet, laptop, etc. The bubble 220 is the area in which sensor antenna 210 determines the identities of the wireless devices. There may be none, one or many devices and bearers within bubble 220.

The operator terminal 230, manned by someone who typically checks passports, includes means to record identifying parameters of the bearer, such as passport details, passport picture, loyalty card number, fingerprint, voiceprint, credit card number, etc. Any capture device 240 is capable of capturing physical and biological characteristics of the bearer, such as camera, fingerprint recorder, iris recorder, etc;

A communication medium wired and/or wireless 250 is provided, as well as a server for control and configuration services 260, however the server functionality may be distributed to the counters or otherwise.

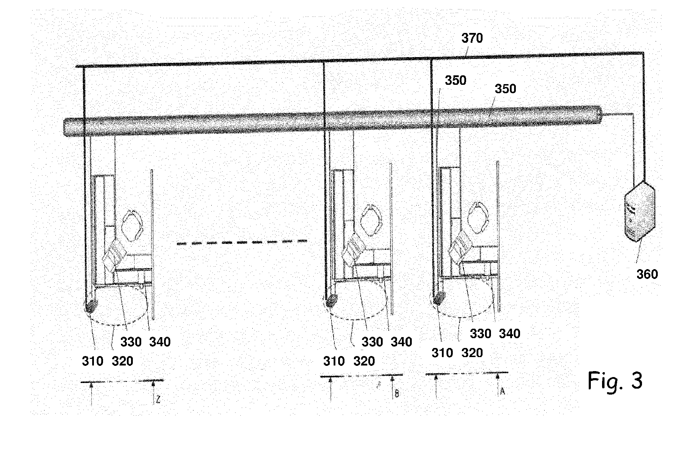

Fig. 3 depicts three counters referenced as A, B and Z and server 360. This deployment may be co-located at one site or represent multi-site deployment. The antenna 310 for each one of these BTS's is kept in a small transition area called a "bubble" 320. The BTS's are capable of identifying one or more device type(s).

The operator terminal 330, includes means to record identifying parameters of the bearer, such as passport details, passport picture, loyalty card number, fingerprint, voiceprint credit card number, etc. Any capture device 340 provided may be capable of capturing physical and biological characteristics of the bearer, such as camera, fingerprint recorder, iris recorder, etc.

A communication medium wired and/or wireless 350 is provided, as well as a server for control and configuration services 360, however the server functionality may be distributed to the counters or otherwise. Also provided is a communication medium capable of transferring analog signals 370, such as coax, repeaters, splitters capable of transferring single and/or multiband RF signal such as those emitted by cellular phones; Active Distributed Antenna Array; Passive Distributed Antenna Array, etc.

Generally speaking, in order to perform its task, i.e. correlate a phone with the correct identity/passport, the system preferably needs to successfully perform each and all of the following steps:
a. Registration from the real network. This includes supporting all the present operators in the terminal as well as dealing with both 2G and 3G networks.
b. Waiting for the phone to enter one of the bubbles prior the person leaving the counter.
c. Correlating phone id with person id (e.g., a passport). Additionally, the system needs to:
d. Release the phone back to the real network at most 10 meters after leaving the booths area, allowing any normal phone activity (calls, internet browsing etc.).
e. Excluding phones of people working at the terminal. This exclusion provides that the system preferably maintains a list of phones for which signals from them will be disregarded.

Having described the present invention with regard to certain specific embodiments thereof, it is to be understood that the description is not meant as a limitation, since further modifications will now suggest themselves to those skilled in the art, and it is intended to cover such modifications as fall within the scope of the appended claims.

## Claims

1. A method of correlating a wireless device with an identity of the bearer of the device, comprising:
providing an International Mobile Subscriber Identity (IMSI) catcher in the vicinity of said wireless device;
registering said IMSI catcher with a network authorized by said bearer, wherein the registration supports a plurality of wireless devices located in the vicinity;
receiving signals indicative of the International Mobile Subscriber identity of said wireless device ;
recording identifying characteristics associated with a bearer of said wireless device; and correlating said International Mobile Subscriber Identity with a bearer identity

2. The method of claim 1, wherein said identifying characteristics of a bearer of a device comprise one or more of the following: details of an identification document; electronically or magnetically embedded details of an identification document; biometric identifiers of said bearer.

3. The method of claim 1, further comprising recording the angular location of said wireless device relative to a reference point, and correlating said angular location with one or more of: said International Mobile Subscriber Identity and said identifying characteristics associated with a bearer of said wireless device.

4. The method of claim 1, further comprising detecting the signal strength in relation to a cellular tower and correlating said signal strength with one or more of: said International Mobile Subscriber Identity and said identifying characteristics associated with a bearer of said wireless device.

5. The method of claim 1, wherein said IMSI catcher comprises an International Mobile Equipment Identity (IMEI) sensor.

6. The method of claim 1, further comprising:
disregarding known wireless devices belonging to known users located in the vicinity.

7. The method of claim 1, wherein said wireless device is selected from the following group: a cellular phone, a PDA, a tablet, a laptop, a device having a Global Positioning System receiver, and a wireless tracker tag.

8. The method of claim 1, wherein communication service to and from said wireless device is uninterrupted.

9. The method of claim 1, further comprising:
intercepting the calls of the targeted wireless device and eavesdropping on outgoing calls and SMS.

10. The method of claim 1, wherein the bearer ID is selected from: a passport; a library card, a social security card, a driver's license and a national identity card.
